(19) Europäisches Patentamt

European Patent Office

Office européen des brevets

(11) Numéro de publication : **0 321 335 B1**

(12) **FASCICULE DE BREVET EUROPEEN**

(45) Date de publication du fascicule du brevet :
**11.03.92 Bulletin 92/11**

(21) Numéro de dépôt : **88403168.3**

(22) Date de dépôt : **13.12.88**

(51) Int. Cl.⁵ : **F16H 1/445**

(54) **Système différentiel à glissement variable contrôlé.**

(30) Priorité : **17.12.87 FR 8717652**

(43) Date de publication de la demande :
**21.06.89 Bulletin 89/25**

(45) Mention de la délivrance du brevet :
**11.03.92 Bulletin 92/11**

(84) Etats contractants désignés :
**DE GB IT**

(56) Documents cités :
**EP-A- 0 093 813**
**EP-A- 0 237 840**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Bouveret, Jean-Michel**
**58 Bis, rue d'Estienne d'Orves**
**F-94340 Joinville le Pont (FR)**

(74) Mandataire : **Durand, Yves Armand Louis et al**
**CABINET WEINSTEIN 20, Avenue de**
**Friedland**
**F-75008 Paris (FR)**

EP 0 321 335 B1

Jouve, 18, rue Saint-Denis, 75001 PARIS

# Description

La présente invention concerne un système différentiel à glissement variable contrôlé pouvant entraîner deux roues d'un essieu d'un véhicule automobile, ou deux arbres respectivement reliés aux roues avant et arrière d'un tel véhicule.

On connaît de tels systèmes différentiels du type comprenant un moyen embrayage à disques susceptible d'occuper une position débrayée où le différentiel entraîne conjointement deux arbres coaxiaux de sortie respectivement à deux vitesses angulaires pouvant différer librement et une position embrayée où l'action du différentiel est limitée, s'opposant à une rotation relative entre les deux arbres de sortie.

Ces systèmes connus utilisent pour la commande du moyen embrayage soit un dispositif hydraulique comme décrit par exemple dans les brevets US-A-3 899 938 et 3 138 970, soit un dispositif électromagnétique comme décrit dans EP-B-0 237 840.

Dans le cas de l'utilisation d'un dispositif hydraulique, l'effort nécessaire pour produire un couple de verrouillage ou de report entre les deux arbres de sortie du différentiel est généré au niveau d'un récepteur hydraulique, soit en direct sur les parties frottantes (disques du différentiel), soit par l'intermédiaire d'un moyen mécanique d'amplification, tel qu'une fourchette, dans les rapports des bras de levier. Le récepteur hydraulique est alimenté par un émetteur hydraulique qui est lui-même alimenté par une pompe débitant dans un réservoir tampon. Pour contrôler le niveau de l'effort et le faire varier en fonction d'un certain nombre de paramètres tels que la vitesse différentielle entre les deux arbres de sortie, la vitesse du véhicule, la charge moteur, l'utilisation des freins, le braquage des roues directrices, il est nécessaire d'insérer dans le circuit hydraulique un système de vanne variable, par exemple une électro-vanne proportionnelle. Cette vanne doit elle-même être commandée par un système logique exploitant les données des paramètres utilisés pour modifier l'état des sytèmes différentiels, ce système logique étant par exemple un boîtier électronique utilisant les informations issues de différents capteurs électriques des vitesses angulaires des arbres de sortie.

Dans le cas de l'utilisation d'une puissance électrique, l'effort appliqué sur les parties frottantes du différentiel est généré par le système électromagnétique avec éventuellement une amplification mécanique.

L'effort nécessaire de serrage des disques de friction du moyen embrayage pour obtenir un couple de verrouillage ou de report d'un niveau suffisant est relativement élevé (de l'ordre de plusieurs centaines de kilogrammes-force) que l'on utilise le système hydraulique ou le système électromécanique de commande. Ceci impose, dans le cas du système hydraulique, de travailler avec des niveaux de pression élevés pour réduire les dimensionnements du système.

Selon EP-B-0 237 840, le dispositif qui répond au préambule de la revendication 1, commande électromagnétiquement le moyen embrayage et la puissance électrique utilisée nécessaire à cet effet implique un dimensionnement important du dispositif électromagnétique.

En conséquence, quelle que soit la technologie utilisée pour la commande du moyen embrayage, les systèmes connus impliquent un coût de réalisation et un dimensionnement importants.

La présente invention a pour but d'éliminer les inconvénients ci-dessus des systèmes connus en proposant un système différentiel à glissement variable contrôlé et du type comprenant un moyen embrayage à disques pouvant occuper une position débrayée où le différentiel entraîne conjointement deux arbres coaxiaux de sortie respectivement à deux vitesses angulaires pouvant différer librement et une position embrayée où l'action du différentiel est limitée ou verrouillée, s'opposant à une rotation relative entre les deux arbres de sortie; un dispositif de commande du moyen embrayage comprenant des organes de poussée axiale d'une douille, entourant l'un des arbres de sortie, pour créer par serrage des disques du moyen embrayage un couple de verrouillage du différentiel, un moyen de commande extérieur au carter du différentiel actionnant les organes de poussée axiale, et un organe élastique entourant l'arbre de sortie, disposé entre la douille et les organes de poussée axiale et appliquant à la douille, sous l'action du moyen de commande, un effort de serrage des disques du moyen embrayage correspondant au couple de verrouillage, et caractérisé en ce que le moyen de commande comprend un moteur électrique auquel est associé un dispositif de compensation de l'effort de manoeuvre nécessaire au moteur électrique pour amener l'organe élastique à créer l'effort de serrage des disques du moyen embrayage.

Selon une caractéristique de l'invention, le dispositif de compensation comprend un ressort ayant l'une de ses extrémités reliée à un point fixe d'ancrage et son autre extrémité coopérant par l'intermédiaire d'un pignon avec une crémaillère associée aux organes de poussée axiale, ladite crémaillère coopérant, par l'intermédiaire d'une liaison à vis sans fin et pignon s'engrènant avec la crémaillère, avec le moteur électrique, le ressort du dispositif de compensation exerçant sur les organes de poussée un effort sensiblement égal et d'un sens opposé à l'effort produit par l'organe élastique créant le couple de verrouillage.

Selon une autre caractéristique, l'organe élastique a une relation effort-course sensiblement linéaire.

Selon encore une autre caractéristique de l'invention, l'organe élastique est un ressort hélicoïdal de compression.

Selon toujours une autre caractéristique de l'invention, l'organe élastique est constitué d'un empilage de rondelles troncôniques élastiques.

Selon une autre caractéristique de l'invention, les organes de poussée axiale comprennent une plaque pivotante ayant un secteur denté constituant la crémaillère précitée, une fourchette pivotant coaxialement à la plaque en concomitance avec cette dernière et un manchon relié à la fourchette et coulissant sur l'arbre de sortie pour comprimer l'organe élastique suivant la valeur du couple de verrouillage souhaitée.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 représente schématiquement un système différentiel à glissement variable contrôlé au repos conforme à l'invention ;

La figure 2 est une vue analogue à la figure 1 mais représentant le système de l'invention en action ;

La figure 3 est une vue en coupe d'un mode de réalisation du système différentiel conforme à l'invention ;

La figure 4 est une vue en coupe suivant la ligne IV-IV de la figure 3 ; et

La figure 5 est une vue en coupe suivant la ligne V-V de la figure 4.

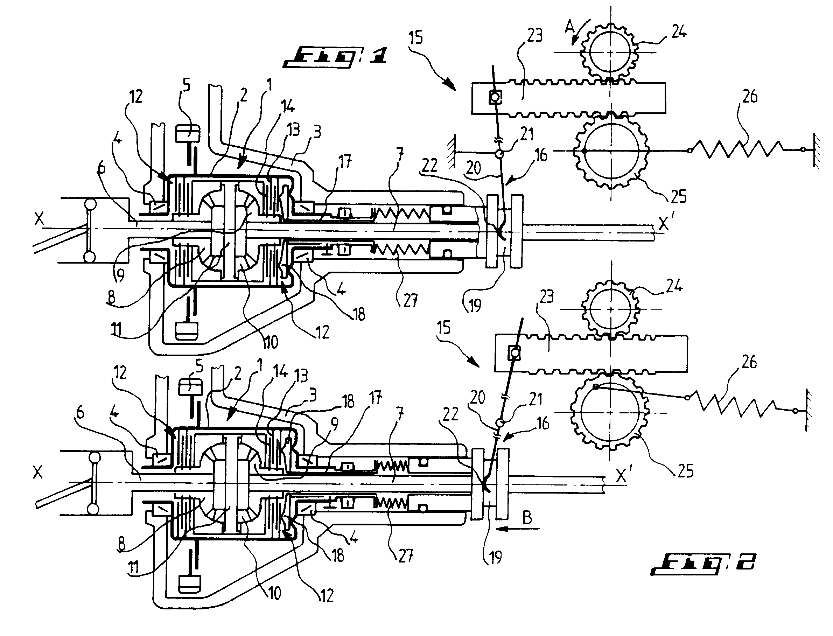

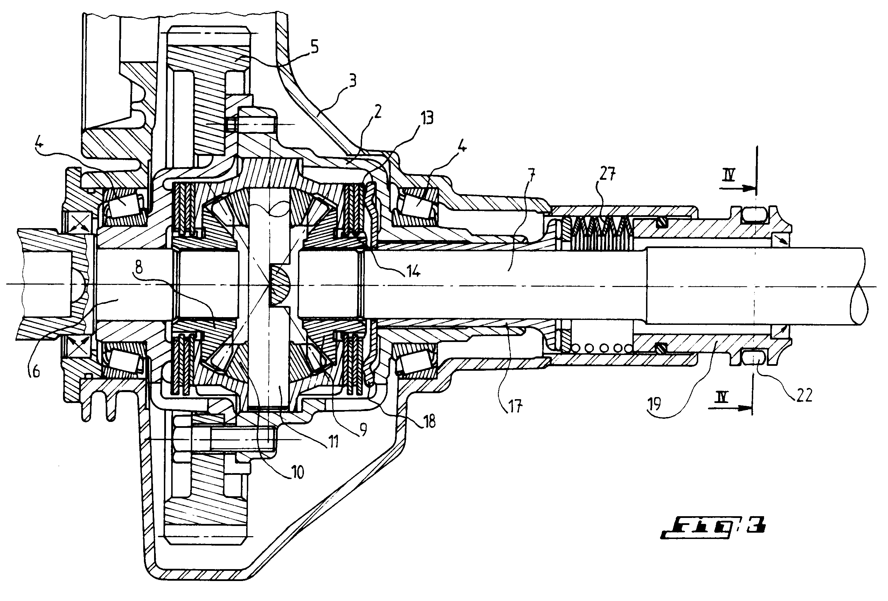

En se reportant aux figures 1 et 2, le système différentiel à glissement variable contrôlé conforme à l'invention comprend un différentiel 1 d'un véhicule automobile, comprenant un boîtier de différentiel 2 supporté rotativement dans un carter 3, par l'intermédiaire de roulements 4, autour d'un axe longitudinal X-X'. Le différentiel est entraîné par l'intermédiaire d'un pignon 5 solidaire du boîtier 2 par un pignon de renvoi (non représenté) solidaire par exemple d'un arbre de transmission du véhicule. Deux arbres de sortie 6 et 7, ayant leurs deux extrémités extérieures reliées respectivement aux roues droite et gauche d'un essieu moteur du véhicule, s'étendent à l'intérieur du boîtier 2 et sont reliés respectivement à deux pignons latéraux côniques 8 et 9. Des pignons satellites 10 sont montés tourillonant sur un axe 11 pour accomplir l'action différentielle normale lorsque le véhicule négocie par exemple un virage. Un tel différentiel, largement connu en soi, n'a pas à être décrit plus en détail en rappelant toutefois qu'il permet aux deux arbres de sortie 6 et 7 de tourner relativement l'un par rapport à l'autre à des vitesses angulaires différentes en répartissant le couple d'entrée produit par le pignon 5 entre les deux arbres de sortie.

Un moyen d'embrayage 12 est prévu dans le différentiel 1 et comprend plusieurs disques de friction dont certains 13 sont solidaires du boîtier 2 tandis que les autres 14, entre deux disques adjacents 13, sont solidaires des arbres de sortie 6 et 7.

Le moyen embrayage 12 est embrayé par un dispositif de commande 15 comprenant des organes de poussée 16, le long de l'axe X-X', d'une douille 17 entourant coaxialement l'arbre de sortie 7 et qui, lorsque déplacée vers la gauche par rapport à la figure 1, exerce un effort de serrage sur les disques du moyen embrayage 12 par l'intermédiaire d'un organe 18 à leviers rigides radiaux dont seulement deux sont représentés aux figures. Les organes de poussée axiale de la douille 17 comprennent un manchon 19 coulissant sur l'arbre de sortie 7 et un levier 20 monté pivotant autour d'un pivot fixe 21 et dont une extrémité 22 forme une fourchette juxtaposée au manchon 19. L'autre extrémité opposée du levier 20 est reliée mécaniquement à une crémaillère 23 sur laquelle engrènent de part et d'autre de la crémaillère, d'une part, un pignon 24 entraîné en rotation par un moyen de commande ou de manoeuvre constitué par exemple par un moteur électrique et, d'autre part, un pignon 25 monté tournant autour d'un axe fixe et auquel est reliée une extrémité d'un ressort 26 dont l'autre extrémité est reliée à un point d'ancrage fixe. Le ressort 26 fait office de dispositif de compensation comme il sera décrit ultérieurement. L'ensemble constitué par les éléments 20, 23-26 et le moteur électrique est extérieur au carter 3 du différentiel.

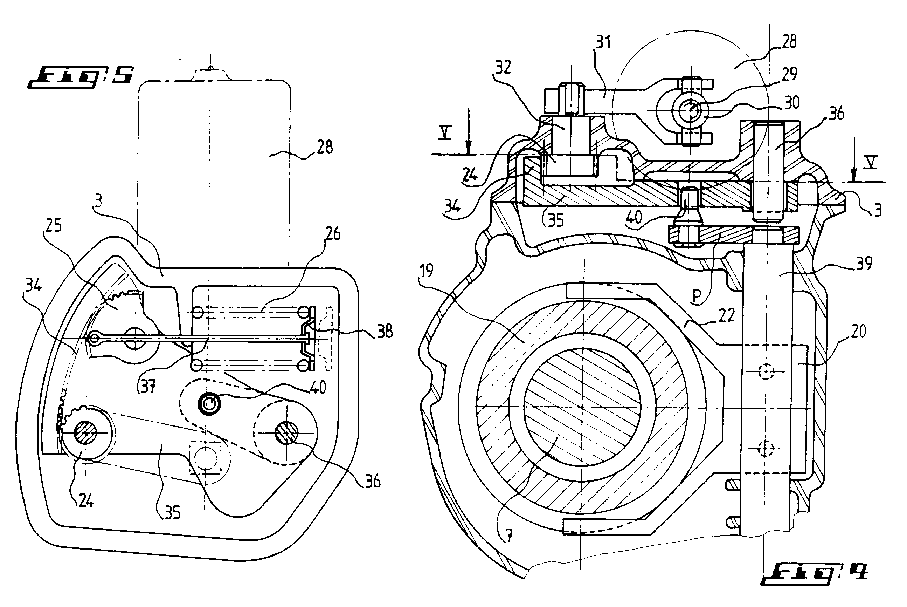

Un organe élastique 27, entourant l'arbre de sortie 7, est interposé entre la douille 17 et le manchon 19. Cet organe élastique peut être constitué par un ressort hélicoïdal de compression ou par un empilage de rondelles troncôniques élastiques comme représenté à la figure 3. Avantageusement, l'organe élastique 27 présente une loi relation effort-course sensiblement linéaire.

Le principe de fonctionnement du système conforme à l'invention ressort déjà de la description qui en a été faite ci-dessus et va être maintenant expliqué brièvement.

Lorsque le système occupe la position de repos représentée à la figure 1 où le moteur électrique n'exerce aucune action sur la douille 17, le moyen embrayage 12 est débrayé de sorte que le différentiel fonctionne normalement, autorisant toute libre rotation relative entre les arbres 6 et 7.

Pour embrayer le moyen embrayage 12, le moteur électrique est alimenté pour entraîner le pignon 24 dans le sens contraire des aiguilles d'une montre comme indiqué par la flèche A en figure 1, déplaçant ainsi la crémaillère 23 vers la droite, ce déplacement de la crémaillère fait pivoter le bras 20 autour du pivot 21 dans le sens des aiguilles d'une montre, lequel bras 20 déplace axialement le manchon 19 le long de l'arbre de sortie 7 vers la gauche comme indiqué par la flèche B en figure 2. L'organe élastique 27, en se comprimant sous l'action de poussée axiale du manchon 19, transmet à la douille 17 un effort de serrage sur les disques du moyen embrayage 12. L'effort exercé par l'organe élastique 27 sur la douille 17 est choisi de façon à créer le couple de verrouillage ou de report voulu entre les deux arbres de sortie du différentiel. Cet effort est variable en fonction d'un certain nombre de paramètres liés à l'état du véhicule tels que la vitesse différentielle entre les deux arbres de sortie, la vitesse du véhicule, la charge moteur du véhicule, l'utilisation des freins, le braquage des roues directrices, etc...

Pendant la manoeuvre d'embrayage ci-dessus décrite, la composante active du ressort 26 est telle qu'elle varie pratiquement suivant la même loi que celle à laquelle obéit l'organe élastique 27. Ainsi, en ajustant les caractéristiques du dispositif de compensation formé par le ressort 26 et de l'organe élastique 27, ceux-ci peuvent fournir sur la crémaillère et sur les organes de poussée, pendant la manoeuvre d'embrayage du moyen embrayage 12, des efforts sensiblement égaux en valeur et de sens opposés. Ainsi, l'effort de manoeuvre nécessaire au moteur électrique pour amener l'organe élastique 27 à créer l'effort de serrage des disques du moyen embrayage 12 est extrêmement réduit grâce à l'adjonction du dispositif de compensation à ressort 26. Le moteur électrique utilisé peut alors être de faible puissance.

Bien entendu, pour ramener le système différentiel à la position représentée à la figure 1, le pignon 24 est manoeuvré en sens inverse à la flèche A, le moteur électrique n'ayant à développer qu'un faible effort de manoeuvre.

Sur les figures 3 à 5, représentant un mode de réalisation particulier du système différentiel conforme à l'invention, les moyens identiques ou accomplissant les mêmes fonctions que ceux représentés aux figures 1 et 2 portent les mêmes références.

Selon ce mode de réalisation, le moteur électrique 28 entraîne, par l'intermédiaire d'une vis sans fin 29 coopérant avec un écrou 30, un bras 31 solidaire, d'une part, de l'écrou 30 et d'autre part d'un axe rotatif 32 lui-même solidaire d'un pignon 24, et un secteur denté 34 sur une partie duquel engrène le pignon 24. Ce secteur denté 34 constitue en fait la crémaillère et est solidaire d'une plaque 35 montée pivotante autour d'un axe fixe 36 solidaire du carter 3 du système différentiel. Sur le secteur denté 34 engrène le pignon 25 auquel est attelée une extrémité d'une tige 37 dont l'autre extrémité opposée est solidaire d'une coupelle 38 de retenue du ressort de compensation 26 dont l'extrémité opposée à celle en appui contre la coupelle 38 se trouve en appui contre une partie fixe correspondante du carter 3.

La fourchette 22 du bras 20 est solidaire d'un axe 39, coaxial à l'axe 36, lequel axe 39 est monté pivotant dans le carter 3 du système différentiel. La fourchette 22 pivote en concomitance avec la plaque 35 par l'intermédiaire d'une liaison de transmission mécanique comprenant une plaque P solidaire d'une extrémité de l'axe 39 et comportant un pion 40 solidaire de celle-ci et s'engageant dans un trou correspondant de la plaque 35.

Ainsi, le secteur denté 34, sous l'effet de la poussée du ressort 27 sur les disques du moyen embrayage du différentiel, par l'intermédiaire de la fourchette 22 et du manchon 19, et de l'effort de compensation transmis par le pignon 25 dû au ressort 26, est sensiblement en équilibre en tout point de la course utile. Le moteur électrique 28 a donc uniquement pour travail de vaincre les inerties des différentes pièces.

Le moyen embrayage 12 peut être commandé en tout ou rien, c'est-à-dire que le différentiel est libre ou verrouillé, ou peut être commandé en fonction de différents paramètres de façon que le taux de verrouillage ou de report à l'intérieur du différentiel soit alors une fonction de ces paramètres. Dans ce dernier cas, le moteur électrique peut par exemple être piloté par l'intermédiaire d'un dispositif électronique qui détermine la position du secteur denté 34 et donc le couple de verrouillage, en fonction des paramètres acquis.

Le système différentiel conforme à l'invention a été décrit en application à l'entraînement de deux arbres de sortie reliés respectivement aux roues avant et arrière d'un véhicule mais il est bien entendu qu'il peut également s'appliquer à l'entraînement de deux roues d'un essieu.

## Revendications

1. Système différentiel à glissement variable contrôlé du type comprenant un moyen embrayage (12) à disques (13, 14) pouvant occuper une position débrayée où le différentiel entraîne conjointement deux arbres coaxiaux de sortie (6, 7) respectivement à deux vitesses angulaires pouvant différer librement et une position embrayée où l'action du différentiel est limitée ou verrouillée, s'opposant à une rotation relative entre les deux arbres de sortie (6, 7); un dispositif de commande du moyen embrayage comprenant des organes de poussée axiale (19, 22) d'une douille (17) entourant l'un (7) des arbres de sortie (6, 7), pour créer par serrage des disques (13, 14) du moyen embrayage (12) un couple de verrouillage du différentiel, un moyen de commande (28) extérieur au carter du différentiel actionnant les organes de poussée axiale (19, 22), et un organe élastique (27) entourant l'arbre de sortie (7), disposé entre la douille (17) et les organes de poussée axiale (19, 22) et appliquant à la douille (17), sous l'action du moyen de commande (28), un effort de serrage des disques du moyen embrayage (12) correspondant au couple de verrouillage, caractérisé en ce que le moyen de commande (28) comprend un moteur électrique (28) auquel est associé un dispositif de compensation (26) de l'effort de manoeuvre nécessaire au moteur électrique (28) pour amener l'organe élastique (27) à créer l'effort de serrage des disques du moyen embrayage (12).

2. Système selon la revendication 1, caractérisé en ce que le dispositif de compensation précité comprend un ressort (26) ayant l'une de ses extrémités reliée à un point fixe d'ancrage et son autre extrémité coopérant par l'intermédiaire d'un pignon (25), avec une crémaillère (23) associée aux organes de poussée axiale, ladite crémaillère coopérant, par l'intermédiaire d'une liaison à vis sans fin (29) et pignon (24) engrènant avec la crémaillère, avec le moteur électrique (28) et en ce que le ressort (26) du dispositif de compensation exerce sur les organes de poussée (16) un effort sensiblement égal et de sens opposé à l'effort produit par l'organe élastique (27) créant le couple de verrouillage précité.

3. Système selon la revendication 1 ou 2, caractérisé en ce que l'organe élastique (27) a une relation effort-course sensiblement linéaire.

4. Système selon l'une des revendications précédentes, caractérisé en ce que l'organe élastique (27) est un ressort hélicoïdal de compression.

5. Système selon l'une des revendications 1 à 3, caractérisé en ce que l'organe élastique (27) est constitué d'un empilage de rondelles tronçôniques élastiques.

6. Système selon l'une des revendications précédentes, caractérisé en ce que les organes de poussée axiale comprennent une plaque pivotante (35) ayant un secteur denté (34) constituant la crémaillère précitée, une fourchette (22) pivotant coaxialement à la plaque (35) en concomitance avec cette dernière et un manchon (19) relié à la fourchette (22) et coulissant sur l'arbre de sortie (7) pour comprimer l'organe élastique (27) suivant la valeur du couple de verrouillage souhaitée.

7. Système selon l'une des revendications précédentes, caractérisé en ce que le moteur électrique (28) est piloté par l'intermédiaire d'un dispositif électronique déterminant le couple de verrouillage en fonction de divers paramètres tels que la vitesse différentielle entre les deux arbres de sortie, la vitesse du véhicule, la charge moteur du véhicule, l'utilisation des freins, le braquage des roues directrices.

**Patentansprüche**

1. Differentialsystem mit veränderlichem kontrolliertem Schlupf, derjenigen Gattung mit einem Kupplungsmittel (12) mit Scheiben (13,14), die eine ausgekuppelte Stellung einnehmen können, in welcher das Differentialgetriebe zwei koaxiale Ausgangswellen (6,7) jeweils mit zwei Winkelgeschwindigkeiten, die sich voneinander frei unterscheiden können, zusammen antreibt und eine eingekuppelte Stellung einnehmen können, in welcher die Wirkung des Differentialgetriebes begrenzt bzw. verriegelt ist und einer relativen Drehung zwischen den beiden Ausgangswellen (6,7) entgegen wirkt; einer Vorrichtung zur Betätigung des Kupplungsmittels mit axialen Schubgliedern (19,22) zum Verschieben einer eine (7) der Ausgangswellen (6,7) umgebenden Hülse (17), um durch Zusammendrücken der Scheiben (13,14) des Kupplungsmittels (12) ein Verriegelungsdrehmoment des Diffferentialgetriebes zu schaffen, einem ausserhalb des Differentialgetriebsgehäuses liegenden die axialen Schubglieder (19,22) betätigenden Steuermittel (28) und einem die Ausgangswelle (7) umgebenden, zwischen der Hülse (17) und den axialen Schubgliedern (19,22) angeordneten und eine dem Verriegelungsdrehmoment entsprechende Kraft zum Zusammendrücken der Scheiben des Kupplungsmittels (12) an die Hülse (17) unter der Wirkung des Steuermittels (28) anlegenden elastischen Glied (27), dadurch gekennzeichnet, dass das Steuermittel (28) einen elektrischen Motor (28) aufweist, dem eine Vorrichtung (26) zum Ausgleich der für den elektrischen Motor (28) erforderlichen Betätigungskraft zugeordnet ist, um das elastische Glied (27) zu veranlassen, die Kraft zum Zusammendrücken der Scheiben des Kupplungsmittels (12) zu erzeugen.

2. System nach Anspruch 1, dadurch gekennzeichnet, dass die vorgenannte Ausgleichvorrichtung eine Feder (26) aufweist, deren eines ihre Enden mit einem ortsfesten Verankerungspunkt verbunden ist und wobei ihr anderes Ende über ein Zahnrad (25) mit einer den axialen Schubgliedern zugeordneten Zahnstange (23) zusammenwirkt, wobei die besagte Zahnstange über eine Verbindung mit Schnecke (29) und mit der Zahnstange kämmenden Zahnrad (24), mit dem elektrischen Motor (28) zusammenwirkt und dass die Feder (26) der Ausgleichvorrichtung auf die Schubglieder (16) eine Kraft ausübt, die der durch das das vorgenannte Verriegelungsdrehmoment erzeugende elastische Glied (27) erzeugten Kraft etwa gleich und in entgegensetzter Richtung ist.

3. System nach Anspruch 1 oder 2, dadurch gekennzeichnet, dass das elastische Glied (27) ein etwa lineares Kraft-Weg-Verhältnis aufweist.

4. System nach einem der vorangehenden Ansprüche, dadurch gekennzeichnet, dass das elastische Glied (27) eine Wendeldruckfeder ist.

5. System nach einem der Ansprüche 1 bis 3, dadurch gekennzeichnet, dass das elastische Glied (27) durch einen Stapel von elastischen kegelstumpförmigen Unterlagscheiben gebildet wird.

6. System nach einem der vorangehenden Ansprüche, dadurch gekennzeichnet, dass die axialen Schubglieder eine Schwenkplatte (35) mit einem die vorgenannte Zahnstange bildenden Zahnsegment (34), eine koaxial zur Platte (35) gleichzeitig mit dieser schwenkbare Gabel (22) und eine mit der Gabel (22) verbundene und auf der Ausgangswelle (7) gleitende Muffe (19) zum Zusammendrücken des elastischen Gliedes (27) entsprechend des Wertes des gewünschten Verriegelungsdrehmomentes aufweist.

7. System nach einem der vorangehenden Ansprüche, dadurch gekennzeichnet, dass der elektrische Motor (28) über eine das Verriegelungsdrehmoment in Abhängigkeit von verschiedenen Parametern wie der Differentialgeschwindigkeit zwischen den beiden Ausgangswellen, der Geschwindigkeit des Fahrzeugs, der Last der Kraftmaschine des Fahrzeugs, der Verwendung der Bremsen, des Ausschlags der Steuerräder, bestimmenden elektronischen Vorrichtung gesteuert wird.

## Claims

1. Differential system with a controlled variable slip, of the type comprising a clutch means (12) with disks (13,14) capable of assuming a declutched position wherein the differential jointly drives two coaxial output shafts (6,7) at two angular speeds, respectively, susceptible of differing freely and a clutched position wherein the action of the differential is limited or locked, opposing a relative rotation between both output shafts (6,7); a device for the control of the clutch means comprising members (19,22) for axially pushing a sleeve (17) surrounding one (7) of the output shafts (6,7) for creating through the clamping of the disks (13,14) of the clutch means (12) a torque for locking the differential, a control means (28) external to the differential casing actuating the axial pushing members (19,22) and an elastic member (27) surrounding the output shaft (7), arranged between the sleeve (17) and the axial pushing members (19,22) and applying to the sleeve (17) under the action of a control means (28) a force for clamping the disks of the clutch means (12) corresponding to the locking torque, characterized in that the control means (28) comprises an electric motor (28) with which is associated a device (26) for the compensation for the operating force necessary for the electric motor (28) to cause the elastic member (27) to create the force for clamping the disks of the clutch means (12).

2. System according to claim 1, characterized in that the aforesaid compensation device comprises a spring (26) having one of its ends connected to a stationary anchoring point and its other end co-operating through the medium of a pinion (25) with a toothed rack (23) associated with the axial pushing members, the said rack co-operating through the medium of a connection through a worm (29) and a gear (24) meshing with the rack, with the electric motor (28) and in that the spring (26) of the compensation device is exerting upon the pushing members (16) a force substantially equal to and of a direction opposite to the force produced by the elastic member (27) creating the aforesaid torque.

3. System according to claim 1 or 2, characterized in that the elastic member (27) has a substantially linear force-stroke relationship.

4. System according to one of the foregoing claims, characterized in that the elastic member (27) is a helical compression spring.

5. System according to one of claims 1 to 3, characterized in that the elastic member (27) is constituted by a stack of frusto-conical elastic washers.

6. System according to one of the foregoing claims, characterized in that the axial-pushing members comprise a pivoting plate (35) having a toothed sector (34) constituting the aforesaid rack, a fork (22) pivoting coaxially to the plate (35) in concomitance with the latter and a sleeve (19) connected to the fork (22) and sliding on the output shaft (7) for compressing the elastic member (27) according to the magnitude of the desired locking torque.

7. System according to one of the foregoing claims, characterized in that the electric motor (28) is controlled through the medium of an electronic device determining the locking torque as a function of various parameters such as the differential speed between both output shafts, the velocity of the vehicle, the load of the engine of the vehicle, the use of the brakes, the deflexion of the steering wheels.

Fig. 1

Fig. 2

FIG. 3

Fig. 5

Fig. 4

EP 0 321 335 B1